# EUROPÄISCHE PATENTANMELDUNG

(11) **EP 1 046 660 A1**
(43) Veröffentlichungstag der Anmeldung: **25.10.2000**
(21) Anmeldenummer: 00104476.7
(22) Anmeldetag: 08.03.2000
(51) Int. Cl.: C08G 18/69

(54) **Thermoplastische Polyurethane**

(30) Priorität: 22.04.1999 DE 19918203
(71) Anmelder: BASF AKTIENGESELLSCHAFT, 67056 Ludwigshafen (DE)
(72) Erfinder: Hackl, Christa, 49090 Osnabrück (DE); Scholz, Günter, Dr., 49448 Lemförde (DE); Krech, Rüdiger, 01968 Senftenberg (DE); Stutz, Herbert, Dr., 76139 Karlsruhe (DE)

(57) **Zusammenfassung**

Thermoplastisches Polyurethan hergestellt mit einem Polyol auf der Basis von Polydien mit einem Molekulargewicht von 500 bis 9000 g/mol und einer mittleren Funktionalität von 2,01 bis 2,5.

## Beschreibung

Die Erfindung bezieht sich auf thermoplastisches Polyurethan hergestellt mit einem Polyol (b1) auf der Basis von Polydien, bevorzugt Polyisopren und/oder Polybutadien, besonders bevorzugt Polybutadien, mit einem Molekulargewicht von 500 bis 9000, bevorzugt 1000 bis 5000 g/mol und einer mittleren Funktionalität, bevorzugt gegenüber Isocyanatgruppen, von 2,01 bis 2,5, bevorzugt 2,1 bis 2,5, besonders bevorzugt 2,2 bis 2,4. Des weiteren bezieht sich die Erfindung auf Verfahren zur Herstellung solcher TPU, deren Verwendung und Mischungen dieser thermoplastischen Polyurethane mit weiteren thermoplastischen Kunststoffen.

Thermoplastische Polyurethane, im Folgenden auch als TPU bezeichnet, und Verfahren zu deren Herstellung sind allgemein bekannt und vielfältig beschrieben. Diese TPU sind teilkristalline Werkstoffe und gehören zu der Klasse der thermoplastischen Elastomere. Sie bestehen aus einem teilkristallinen Hartblock, der sich aus dem Isocyanat und niedermolekularem Kettenverlängerer aufbaut, und einem amorphen Weichblock, der typischerweise aus den höhermolekularen gegenüber Isocyanaten reaktiven Verbindungen, üblicherweise Polyester- und/oder Polyetherdiolen, aufgebaut wird. Eine möglichst gute mikromorphologische Entmischung dieser Phasen ist die notwendige Voraussetzung für das elastische Verhalten der TPU. Der Hartblock wirkt aufgrund seiner Teilkristallinität als physikalische Vernetzung, die sich oberhalb des Hartblockschmelzpunktes reversibel auflöst, was die thermoplastische Verformung des Materials ermöglicht. Der Weichblock befindet sich bei Raumtemperatur in einem plastischen oder flüssigen Zustand, auf ihn läßt sich letztendlich die leichte Verformbarkeit des TPUs zurückführen. Die physikalische Vernetzung ermöglicht dabei die elastische Rückkehr in den Ausgangszustand.

Die TPU zeichnen sich durch eine Kombination von vorteilhaften Stoffeigenschaften, wie beispielsweise einem geringen Abrieb, einer guten Chemikalienbeständigkeit sowie einer hohen Flexibilität bei einer gleichzeitig hohen Festigkeit aus. Trotz dieser bereits sehr vorteilhaften Eigenschaften der TPUs mangelt es nicht an Anstrengungen, ausgewählte Parameter dieser Werkstoffe weiter zu verbessern.

So werden in der WO 97/00901 thermoplastische Polyurethane beschrieben, die mit einem Polydiendiol, insbesondere Polybutadiendiol in hydrierter Form, hergestellt werden. Die Aufgabe, die mit dieser technischen Lehre gelöst wurde, bestand in einer Verbesserung der Hydrolysestabilität der TPU. Als Polydiendiole werden ausschließlich Verbindungen offenbart, die eine Hydroxylfunktionalität von ≤ 2 aufweisen. Verbindungen, die eine Funktionalität von größer besitzen, sind laut dieser Schrift nicht zur Herstellung von TPU geeignet (Seite 1, Zeilen 27 bis 29). Dies soll gemäß WO 97/00901 auch für die in dieser Schrift angegebenen Produkte der Firma Kuraray gelten, die eine Funktionalität von 2,2 aufweisen sollen.

Ziel der vorliegenden Erfindung war es somit, TPU mit verbesserten Eigenschaften zu entwickeln, insbesondere sollte die Stabilität der TPU in organischen Lösungsmitteln verbessert, die Temperaturbeständigkeit erhöht, die Klebrigkeit der Oberfläche insbesondere bei TPU mit einer Shore-Härte von kleiner 85 A verringert und/oder die Naßrutschfestigkeit verbessert werden.

Diese Aufgabe konnte durch die eingangs beschriebenen TPU gelöst werden.

Gegenstand dieser Erfindung sind somit auch thermoplastische Polyurethane enthaltend kovalent gebundenes Polydien, bevorzugt Polyisopren und/oder Polybutadien, besonders bevorzugt Polybutadien, mit einem Molekulargewicht von 500 bis 9000 g/mol und einer mittleren Funktionalität, bevorzugt gegenüber Isocyanatgruppen, von 2,01 bis 2,5, bevorzugt 2,1 bis 2,5, besonders bevorzugt 2,2 bis 2,4.

Die erfindungsgemäßen thermoplastischen Polyurethane zeichnen sich durch eine verbesserte Temperaturbeständigkeit und eine deutlich erhöhten Stabilität in organischen Lösungsmitteln, wie anhand der erhöhten Beständigkeit gegen Spannungsrißkorrosion nachgewiesen werden konnte, aus. Des weiteren zeigen die TPU eine verbesserte Naßrutschfestigkeit, was sich durch ein verringertes Gleiten auf wässrigen Oberflächen bemerkbar macht, als auch eine erhöhte Temperaturbeständigkeit, verglichen mit TPU gleicher Shore Härte. Außerdem konnte überraschenderweise die Klebrigkeit der Oberfläche, insbesondere von weichen TPU mit einer Shore-Härte kleiner 85 A deutlich vermindert werden. Durch die Anwesenheit von Doppelbindungen (nicht hydriertes Polybutadiendiol) ist das gebildete TPU vernetzbar durch elektronische Strahlen. Die erfindungsgemäßen TPU weisen bevorzugt eine Shore-Härte von 50 A bis 70 D, besonders bevorzugt von 60 A bis 95 A auf.

Die erfindungsgemäßen TPU können in Mischung mit weiteren thermoplastischen Kunststoffen, beispielsweise ABS, ASA, SAN, PE, PP, EPM, EPDM, PVC, Acrylatkautschuk, Polyester, POM, PA und/oder PC (Polycarbonat) eingesetzt werden, wobei diese Mischungen nach allgemein bekannten Verfahren, beispielsweise durch gemeinsame Extrusion oder während der TPU-Synthese auf dem Reaktionsextruder, hergestellt werden können.

Als erfindungsgemäße Polyole (b1) können allgemein bekannte Polydiene mit der definierten Funktionalität eingesetzt werden. Bevorzugt verwendet man Polyisopren und/oder Polybutadien, besonders bevorzugt Polybutadien. Die erfindungsgemäße Komponente (b1) soll beispielhaft anhand des besonders bevorzugten Polybutadiens vorgestellt werden, wobei diese Ausführungen nicht auf das Polybutadien beschränkt sind.

Die erfindungsgemäßen Polyole (b1) auf der Basis von Polybutadien können nach allgemein bekannten Verfahren hergestellt werden, z.B. durch übliche anionische oder radikalische Polymerisation von Butadien. Bei der anionischen Polymerisation wird die Polymerisation üblicherweise mit einem geeigneten Initiator, z.B. bekannten Lithium enthaltenen Verbindungen, gestartet, wobei die Reaktion im allgemeinen in organischen Lösungsmitteln, beispielsweise Cyclohexan, Benzol, Hexan oder Tetrahydrofuran, durchgeführt wird. Der Strukturaufbau des Polybutandiens kann gegebenenfalls durch die Zugabe von bekannten Zusatzstoffen, z.B. Ethylenoxid und/oder Diethylether, modifiziert werden. Die Polymerisation wird üblicherweise durch die Zugabe von Verbindungen, die funktionelle Gruppen, bevorzugt Gruppen, die gegenüber Isocyanaten reaktiv sind, besonders bevorzugt Hydroxylgruppen in das Polymer einführen, beispielsweise Ethylenoxid, beendet. Zur Reinigung, insbesondere zur Entfernung des Lithiums, können die Polymere nach üblichen Verfahren, beispielsweise mit Wasser, gewaschen werden. Gegebenenfalls können die Polybutadiene durch Addition von Wasserstoff nach bekannten Verfahren reduziert werden. Die Herstellung von Polybutadienen enthaltend funktionelle Gruppen, bevorzugt Gruppen, die gegenüber Isocyanaten reaktiv sind, besonders bevorzugt Hydroxylgruppen ist in der WO 97/00901, Seite 3, Zeile 14 bis Seite 5, Zeile 7 sowie in US 5 391 663, US 5 416 168, 5 393 843 und US 5 391 637 offenbart.

Die Funktionalität des Polybutadiens, d.h. insbesondere die Anzahl an Hydroxylgruppen pro Molekül, kann sowohl durch einen geeigneten Initiator als auch durch die Zugabe von allgemein bekannten Verbindungen, die Verzweigungen in das wachsende Polymer einführen, in gewünschter Weise erhöht werden. Derartige Produkte sind beispielsweise über die Firmen Elf Atochem (PolyBD ®) und Krahn-Cemie (Liquiflex H ®) kommerziell erhältlich.

Die erfindungsgemäße Funktionalität von 2,01 bis 2,5, bevorzugt 2,1 bis 2,5, besonders bevorzugt 2,2 bis 2,4 bedeutet, daß sich die Funktionalität gemittelt über alle eingesetzten Polybutadiene innerhalb des erfindungsgemäßen Bereiches befindet. Diese mittlere Funktionalität kann nach allgemein bekannten Verfahren bestimmt werden. Bevorzugt ist unter dem Begriff "Funktionalität" die Anzahl an gegenüber Isocyanaten reaktiven Gruppen pro Molekül (b1) zu verstehen, bevorzugt die Anzahl an Hydroxylgruppen pro Molekül (b1).

Verfahren zur Herstellung von TPU sind allgemein bekannt. Erfindungswesentlich ist für die vorliegende Erfindung der Einsatz der bereits beschriebenen Komponente (b1). Beispielsweise können die thermoplastischen Polyurethane durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen hergestellt werden, wobei man erfindungsgemäß als (b) mindestens ein Polyol (b1) auf der Basis von Polydien, bevorzugt Polyisopren und/oder Polybutadien, besonders bevorzugt Polybutadien, mit einem Molekulargewicht von 500 bis 9000 g/mol und einen mittleren Gehalt an Hydroxylgruppen von 2,01 bis 2,5, bevorzugt 2,1 bis 2,5, besonders bevorzugt 2,2 bis 2,4 einsetzt.

Üblicherweise werden thermoplastische Polyurethane mit streng difunktionellen, d.h. beispielsweise 2 Hydroxylgruppen-aufweisenden Verbindungen, hergestellt. Es war für den Fachmann nicht zu erwarten, daß verbesserte thermoplastische Produkte, insbesondere solche mit den bereits beschriebenen Vorteilen, mit deutlich höher-funktionellen Verbindungen zugänglich sind.

Im Folgenden sollen beispielhaft die Ausgangskomponenten und Verfahren zur Herstellung der bevorzugten TPU dargestellt werden.

Die bei der Herstellung der TPU üblicherweise verwendeten Komponenten (a), (b) sowie gegebenenfalls (c), (e) und/oder (f) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2 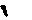 -, 2,4 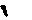 - und/oder 4,4 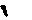 -Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3 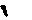 -Dimethyl-diphenyl-diisocyanat, 1,2-Diphenylethandiisocyanat und/oder Phenylendiisocyanat.
b) Als gegenüber Isocyanaten reaktive Verbindungen (b) werden erfindungsgemäß die eingangs definierten Verbindungen (b1) verwendet. Gegebenenfalls können diese erfindungsgemäßen Polyole in Kombination mit weiteren, allgemein bekannten gegenüber Isocyanaten reaktiven Verbindungen eingesetzt werden, beispielsweise Polyesterolen, Polyetherolen und/oder Polycarbonatdiolen, die üblicherweise auch unter dem Begriff "Polyole" zusammengefaßt werden, mit Molekulargewichten von 500 bis 8000, bevorzugt 600 bis 6000, insbesondere 800 bis 4000, und bevorzugt einer mittleren Funktionalität von 1,8 bis 2,3, bevorzugt 1,9 bis 2,2, insbesondere 2. Bevorzugt setzt man zusätzlich zu den erfindungsgemäßen Polyolen Polyetherpolyole (b2) ein, beispielsweise solche auf der Basis von allgemein bekannten Startersubstanzen und üblichen Alkylenoxiden, beispielsweise Ethylenoxid, Propylenoxid und/oder Butylenoxid, bevorzugt Polypropylenglykol. Als (b2) ist Polytetrahydrofuran besonders bevorzugt. Das Gewichtsverhältnis von (b1) zu (b2) beträgt bevorzugt 1 : 0,25 bis 1 : 99 , besonders bevorzugt 1 : 0,3 bis 1 : 9. Mischungen enthaltend (b1) und (b2) mindestens ein Polyetherpolyol mit einer mittleren Funktionalität von 1,8 bis 2,3 stellen einen weiteren Gegenstand der vorliegenden Erfindung dar.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren können den Aufbaukomponenten (a) bis (d) auch übliche Hilfsmittel und/oder Zusatzstoffe (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, Inhibitoren, Stabilisatoren, z.B. gegen Hydrolyse, Licht, Hitze oder Verfärbung, Schutzmittel gegen mikrobiellen Abbau, anorganische und/oder organische Füllstoffe, Verstärkungsmittel und Weichmacher.

Nähere Angaben über die oben genannten Hilfsmittel- und Zusatzstoffe sind der Fachliteratur zu entnehmen. Alle in dieser Schrift genannten Molekulargewichte weisen die Einheit [g/mol] auf.

Zur Einstellung von Härte der TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Bevorzugt werden zur Herstellung der TPU auch Kettenverlängerer (c) verwendet.

Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyantgruppen als OH-Gruppen vor.

Die Herstellung der TPU kann nach den bekannten Verfahren kontinuierlich, beispielsweise mit Reaktionsextrudern nach one-shot oder dem Prepolymerverfahren, oder diskontinuierlich nach dem bekannten Prepolymerprozeß erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt.

Bevorzugt wird die Umsetzung im Reaktionsextruder durchgeführt.

Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert.

Die Verarbeitung der erfindungsgemäß hergestellten TPU, die üblicherweise als Granulat oder in Pulverform vorliegen, zu den gewünschten Folien, Formteilen, Rollen, Fasern, Verkleidungen in Automobilen, Schläuchen, Kabelsteckern, Faltenbälgen, Weichkomponenten in 2-Komponenten (2-K)-Spritzguß mit Thermoplasten, Schleppkabeln, Kabelummantelungen, Dichtungen, Riemen oder Dämpfungselementen erfolgt nach üblichen Verfahren, wie z. B. Spritzguß oder Extrusion.

Die nach den erfindungsgemäßen Verfahren herstellbaren thermoplastischen Polyurethane, insbesondere die Folien, Weichkomponenten in 2-Komponenten (2-K)-Spritzguß mit Thermoplasten, Formteile, Schuhsohlen, Rollen, Fasern, Verkleidungen in Automobilen, Wischerblätter, Schläuche, Kabelstecker, Faltenbälge, Schleppkabel, Kabelummantelungen, Dichtungen, Riemen oder Dämpfungselemente, insbesondere die Folien, weisen die eingangs dargestellten, deutlichen auf.

Die erfindungsgemäßen Vorteile sollen anhand der folgenden Beispiele dargestellt werden.

### Beispiele

Die in der Tabelle 1 dargestellten Ausgangsstoffe wurden in einem 19 mm-Zweiwellen-Reaktionsextruder bei einer Temperatur von 190°C umgesetzt.

**Tabelle 1**

| Rezepturen (Angaben in Gew%) | | | |
|---|---|---|---|
| Einsatzstoff | Beispiel I | Vergleichsbeispiel I | Vergleichsbeispiel II |
| PTHF 2000 | 900 | 1000 | - |
| Polybutandioladipat (PBA) | - | - | 1000 |
| Polybutadiendiol (PBD) | 100 | - | - |
| MDI | 420 | 440 | 440 |
| Butandiol | 106 | 113 | 113 |
| PTHF 2000: Polytetrahydrofuran mit einem Molekulargewicht von 2000 Polybutandioladipat (PBA): Molekulargewicht 2000 Polybutadiendiol: Molekulargewicht 2800, Funktionalität 2,3 | | | |

Die Eigenschaften der hergestellten thermoplastischen Polyurethane sind in der Tabelle 2 dargestellt.

**Tabelle 2**

| Eigenschaften | | | |
|---|---|---|---|
| Prüfkriterium | Beispiel I | Vergleichsbeispiel I | Vergleichsbeispiel II |
| Dichte [g/cm³] | 1,08 | 1,09 | 1,20 |
| Shore Härte | 83 A | 85 A | 84 A |
| Zugfestigkeit [N/mm²] | 30 | 38 | 44 |
| Weiterreißfestigkeit [N/mm] | 43 | 50 | 60 |
| Reißdehnung [%] | 620 | 640 | 700 |
| Abrieb [mm³] | 35 | 39 | 36 |

### Vergleich der Spannugsrißkorrosion

S2 Schulterstäbe gemäß DIN 53504 zur Zugprüfung von Elastomeren wurden im gebogenen Zustand (Dehnung in der Biegung ca. 15%) für 10s in ein Lösungsmittel getaucht und anschließend für 8h an der Luft gelagert. Danach wurde die Oberfläche auf Spannungsrisse untersucht. Da der Einfluß des Weichphasenanteiles erheblich ist, dürfen nur Materialien annähernd gleicher Shore Härte und Polyole annähernd gleicher Molmasse verglichen werden.

Die Ergebnisse sind in der Tabelle 3 dargestellt. Die Spannungsrisse in Lösungsmitteln unterschiedlicher Wechselwirkung werden ausgedrückt durch den Löslichkeitsparameter δ. Angegeben sind Risse, eine angelöste/klebrige Oberfläche (hier: "angel. Oberfl.") oder kein Einfluß auf die untersuchte Probe (-).

**Tabelle 3**

| Lösungsmittel | L-Parameter δ [MPa^0,5] | Beispiel I | Vergleichs-beispiel I | Vergleichs-beispiel II |
|---|---|---|---|---|
| Ethylacetat | 18,5 | - | Risse | Risse |
| Benzol | 18,8 | - | angel. Oberfl. | angel. Oberfl. |
| Styrol | 19,0 | - | Risse | Risse |
| Cyclohexanon | 19,8 | - | angel. Oberfl. | angel. Oberfl. |
| Nitrobenzol | 20,1 | Angel. Oberfl. | angel. Oberfl. | angel. Oberfl. |
| Dimethylacetamid | 22,1 | Risse | Risse | Risse |
| Benzylalkohol | 24,7 | - | angel. Oberfl. | angel. Oberfl. |
| Dimethysulfoxid | 26,4 | Risse | Risse | Risse |
| Propiolacton | 27,2 | - | angel. Oberfl. | angel. Oberfl. |
| Ethylencarbonat | 30,1 | - | Risse | - |

### Temperaturbeständigkeit

Im folgenden Versuch wurden Muster gleicher Shore Härte in einem Temperaturtest geprüft, dabei wurde das beginnende Fließen eines Prüfkörpers, bzw. seine Formstabilität unter Temperaturbelastung verglichen.

Die Ergebnisse sind der Tabelle 4 dargestellt.

**Tabelle 4**

| Temperatur / °C | Beispiel I | Vergleichsbeispiel I | Vergleichsbeispiel II |
|---|---|---|---|
| 140 | - | - | - |
| 150 | - | Sintern | - |
| 160 | - | Schmelzen | Sintern |
| 170 | Sintern | | Schmelzen |

Die Probe des Beispiels sinterte erst bei einer Temperatur von ca. 170 °C, während die Vergleichsprodukte bei diesen Temperaturen bereits geschmolzen waren.

Entsprechend den Schmelzversuchen bestätigt sich auch in der dynamisch-mechanische Analyse für die erfindungsgemäßen Materialien des Beispiels I ein um ca. 20°C höherer Schmelzbereich, als bei den Vergleichsprodukten der Vergleichsbeispiele I und II.

## Patentansprüche

1. Thermoplastisches Polyurethan hergestellt mit einem Polyol auf der Basis von Polydien mit einem Molekulargewicht von 500 bis 9000 g/mol und einer mittleren Funktionalität von 2,01 bis 2,5.

2. Thermoplastisches Polyurethan enthaltend kovalent gebundenes Polydien mit einem Molekulargewicht von 500 bis 9000 g/mol und einer mittleren Funktionalität von 2,01 bis 2,5.

3. Mischungen enthaltend thermoplastische Polyurethane gemäß Anspruch 1 oder 2 sowie mindestens einen weiteren thermoplastischen Kunststoff.

4. Verfahren zur Herstellung von thermoplastischen Polyurethanen durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen, dadurch gekennzeichnet, daß man als (b) mindestens ein Polyol (b1) auf der Basis von Polydien mit einem Molekulargewicht von 500 bis 9000 g/mol und einer mittleren Funktionalität von 2,01 bis 2,5 einsetzt.

5. Verfahren nach Anspruch 4 dadurch gekennzeichnet, daß man zusätzlich zu (b1) mindestens ein Polyetherpolyol (b2) mit einer mittleren Funktionalität von 1,8 bis 2,3 einsetzt.

6. Mischung enthaltend (b1) Polydien und (b2) Polyetherpolyol (b2) mit einer mittleren Funktionalität von 1,8 bis 2,3.

7. Thermoplastische Polyurethane erhältlich durch ein Verfahren gemäß Anspruch 4.

8. Verwendung von thermoplastischen Polyurethanen gemäß Anspruch 1 oder 7 als Folien, Formteile, Schuhsohlen, Rollen, Fasern, Verkleidungen in Automobilen, Wischerblätter, Schläuche, Kabelstecker, Faltenbälge, Schleppkabel, Kabelummantelungen, Dichtungen, Riemen, Dämpfungselemente oder als Weichkomponente im 2-K-Spritzguß mit Thermoplasten.

9. Folien, Formteile, Schuhsohlen, Rollen, Fasern, Verkleidungen in Automobilen, Wischerblätter, Schläuche, Kabelstecker, Faltenbälge, Schleppkabel, Kabelummantelungen, Dichtungen, Riemen, Dämpfungselemente oder Weichkomponenten im 2-K-Spritzguß mit Thermoplasten enthaltend thermoplastische Polyurethane gemäß Anspruch 1 oder 7.
